# EUROPÄISCHE PATENTSCHRIFT

(11) **EP 3 705 078 B1**
(45) Veröffentlichungstag und Bekanntmachung des Hinweises auf die Patenterteilung: **01.03.2023**
(21) Anmeldenummer: 20160991.4
(22) Anmeldetag: 04.03.2020
(51) Int. Cl.: A61C 9/00

(54) **VERFAHREN ZUR HERSTELLUNG EINES INDIVIDUELLEN ABFORMLÖFFELS**
METHOD FOR PRODUCING AN INDIVIDUAL IMPRESSION TRAY
PROCÉDÉ DE FABRICATION D'UN PORTE-EMPREINTE INDIVIDUEL

(30) Priorität: 08.03.2019 DE 102019105956
(43) Veröffentlichungstag der Anmeldung: 09.09.2020
(73) Patentinhaber: Shera Werkstoff-Technologie GmbH & Co KG, 49448 Lemförde (DE)
(72) Erfinder: Sieker, Guido, 32312 Lübbecke (DE); Wahlmann, Dr. Jürgen, 26188 Edewecht (DE)
(74) Vertreter: Duda, Rafael Thomas

(56) Entgegenhaltungen:
- EP-B1- 2 736 448
- CN-A- 108 904 083
- US-A1- 2014 277 665

## Beschreibung

Die vorliegende Erfindung betrifft ein Verfahren zur Herstellung eines individuellen zahnärztlichen Abformlöffels, bei dem zunächst entweder mittels eines geeigneten Abformmaterials und eines Standardlöffels ein Abdruck des Gebisses und des Gaumenbereichs des Patienten geformt und anhand dieser Abformung ein Gipsabdruck als Positivmodell erzeugt wird, welches anschließend abgescannt wird oder alternativ direkt ein Oral-Scan des Gebiss- und Gaumenbereichs angefertigt wird, wobei danach anhand der zuvor gewonnenen Daten mittels 3D-Druck ein individueller Abformlöffel hergestellt wird.

Aus der EP 2 736 448 B1 ist ein Verfahren zur Herstellung eines angepassten zahnärztlichen Abdrucklöffels bekannt, welcher bei der Anfertigung einer Abformung eines Satzes von Zähnen und/oder Kieferbereichen verwendet wird, wobei eine digitale 3D-Darstellung des Satzes von Zähnen oder Kieferbereichen angefertigt wird, ein virtuelles Modell des individuellen Abformlöffels erzeugt wird, welches Teile umfasst, die den Zähnen zugewandten Flächen der labialen und der lingualen Seitenwand entsprechen, und aus dem virtuellen Modell ein individueller Abformlöffel hergestellt wird.

Nachteilig an diesem bekannten Verfahren ist jedoch, dass es in der 3D-Design-Software keine materialabhängigen Parameter für das Abformverfahren zusammen mit dem Abformmaterial gibt. Diese Parameter sind jedoch notwendig für Korrekturen bei der Herstellung des individuellen Löffels. Ohne diese Korrekturen in der Software ist der zu fertigende Abdruck fehlerbehaftet. Bei Versuchen im Rahmen der vorliegenden Erfindung hat die Anmelderin im 3D-Druck verschiedene Abdruckmaterialien ohne Korrekturdaten erarbeitet und dies führte zu fehlerhaften Produkten.

Die DE 10 2014 102 770 A1 beschreibt eine Bissgabel sowie ein Verfahren und ein System zur Darstellung eines Gebisses. Mittels Positionsmarkierungselementen zur Positionsbestimmung wird hier eine Bissgabel konstruiert. Es sollen kleine Bereiche erfasst werden, wozu ein 3D-Oberflächenscanner verwendet wird. Eine Software für den 3D-Druck, die spezifische Materialabhängigkeiten enthält und ein hierauf basierendes Herstellungsverfahren werden in dieser Schrift nicht beschrieben. Die Herstellung eines "Präzisionsabdruckes" ist nicht Gegenstand dieser Anmeldung.

Aus der US 2014/0 315 154 A1 ist ein Verfahren zur Herstellung einer Zahnprothese bekannt, bei dem zunächst entweder ein mittels herkömmlicher Methoden erhaltenes positives Gipsmodell oder ein negatives Abdruckmodell der Zahnreihe eines Patienten mittels eines 3D-Scanners gescannt wird. Im Falle des positiven Gipsmodells wird ein Modell erhalten, welches ein etwas größeres Volumen hat als die Zahnreihe des Patienten, während beim Abscannen des Negativabdrucks durch den Scan ein Modell erhalten wird, welches ein etwas kleineres Volumen hat als die tatsächliche Zahnreihe des Patienten. Um dies zu berücksichtigen wird das digitale Modell durch Multiplikation mit einer einheitlichen Kompensationsrate entweder verkleinert oder vergrößert. Mit den auf diese Weise erhaltenen Daten wird dann die Zahnprothese des Patienten in einem CAD-Verfahren gefräst. Bei diesem bekannten Verfahren wird somit weder ein zahnärztlicher Abformlöffel angefertigt, noch erfolgt die Konstruktion und Herstellung eines individuellen Abformlöffels im 3D-Druck.

In der DE 43 04 421 C1 werden Mittel zur Herstellung eines individuellen zahnärztlichen Löffels beschrieben, wobei es sich um eine herkömmliche handwerkliche Abformmethode handelt. Es wird ein Erstabdruck mit einem thermoplastischen Kunststoff erstellt, wobei im Mund des Patienten Abstandsschichten in Stärken von zwischen 0,1 mm und 50 mm aus einem verformbaren, nicht aushärtenden Material vorgesehen sind. Die Eigenschaften des Abdruckmaterials werden hier für das nachfolgende Abformverfahren nicht berücksichtigt. Es handelt sich nicht um eine computergestützte konstruktive Gestaltung und es wird kein 3D-Druck-Verfahren zur Herstellung eines individuellen Abformlöffels verwendet.

Die Aufgabe der vorliegenden Erfindung ist es daher, ein Verfahren zur Herstellung eines angepassten zahnärztlichen Abdrucklöffels zur Verfügung zu stellen, welches genauere Ergebnisse liefert.

Die Lösung dieser Aufgabe liefert ein Verfahren zur Herstellung eines angepassten zahnärztlichen Abdrucklöffels der eingangs genannten Art mit den Merkmalen des Anspruchs 1.

Erfindungsgemäß werden die für den Oral-Scan erhaltenen Daten mittels wenigstens eines für eine Materialeigenschaft des Abformmaterials spezifischen Parameters modifiziert und anhand dieser modifizierten Daten wird der individuelle Abformlöffel gestaltet.

Das in der vorliegenden Erfindung beschriebene Verfahren ermöglicht es, einen perfekten Abdruck dadurch zu erhalten, dass das Abformmaterial optimal im Abformlöffel verteilt wird und durch den entstehenden Staudruck die Zahnsituation optimal wiedergegeben wird.

Die Herstellung eines individuellen Abformlöffels gelingt erfindungsgemäß durch Anwendung einer Computergestützten konstruktiven Gestaltung desselben. Dabei werden Datensätze verwendet, die nur durch Scanoperationen gewonnen werden, die aus Messungen oraler Art am Patienten oder aus Messungen an einem noch nicht präzisen Abdruck, zum Beispiel aus Gips oder Polymermaterialien, stammen. Diese Datensätze werden verändert, um die Eigenschaften des Abdruckmaterials zu berücksichtigen, für den nachfolgenden Schritt der Herstellung eines präzisen Abdrucks.

Die Abdruckmaterialien besitzen jeweils unterschiedliche Ausdehnungsverhalten, Schrumpfverhalten, Viskositätseigenschaften, Thixotropie, Fließeigenschaften und Abbindeverhalten. Dies wird bei der Konstruktion des individuellen Abformlöffels berücksichtigt. Es werden variable Öffnungen und Umbördelungen am individuellen Abformlöffel geschaffen in Abhängigkeit von dem jeweiligen Abdruckmaterial. Diese Art der Konstruktion ist notwendig zum Aufbau eines Staudrucks, damit das Abdruckmaterial in alle Bereich der Zahnreihe hineinläuft.

Der erfindungsgemäße auf die zuvor beschriebene Art und Weise konstruierte individuelle Abformlöffel wird anschließend im 3D-Druckverfahren hergestellt. Die Materialien für den individuellen Abformlöffel stammen bevorzugt aus dem Bereich der Polyacrylate. Ein wesentlicher Vorteil des erfindungsgemäßen Verfahrens besteht auch darin, dass bis zum abschließenden Schritt der Herstellung des individuellen Abformlöffels keine Materialien eingesetzt werden müssen. Bis dahin ist auch kein Transportvorgang notwendig.

Die Idee der vorliegenden Erfindung besteht darin, die Materialeigenschaften verschiedener Abformmassen bei der Herstellung eines individuellen Abformlöffels zu berücksichtigen, um so einen Präzisionsabdruck herzustellen. Der Katalog der Korrekturdaten für unseren Präzisionsabdruck lässt sich je nach Materialangebot beliebig in unsere Software einbauen. Es ist außerordentlich wichtig, präzisen Zahnersatz herzustellen, weil hiervon die akzeptierte Integration des Zahnersatzes im Kieferbereich des Menschen abhängig ist.

Die bevorzugte Vorgehensweise bei der Herstellung von Zahnersatz nach dem erfindungsgemäßen Verfahren wird nachfolgend näher erläutert. Bei dem erfindungsgemäßen Verfahren erfolgt in einem ersten Schritt ein Abdruck eines defekten Gebisses oder Gaumenbereichs, wobei die Herstellung beim Zahnarzt mit einem konventionellen Abformlöffel (Konfektionslöffel) erfolgt. Geeignete Abformmaterialien sind beispielsweise Alginate, monophasige, duophasige Polymere oder Doppelmisch-Polymere. Die Polymere sind bevorzugt Silicone oder Polyether.

### Alternativ kann auch ein Oral-Scan vom relevanten Zahn-Gaumenbereich angefertigt werden

Im nächsten Schritt erfolgt die Herstellung eines Gips-Abdruckes (Gips-Modell) des Zahn-Gaumenbereiches aus dem ersten Schritt.

Dieses Gips-Modell wird abgescannt bzw. es liegt der Oral-Scan vor. Mittels einer speziellen Software wird aus dem Scan der individuelle Löffel berechnet und datenmäßig festgelegt. Der so berechnete Löffel besteht nur aus der Umhüllungs-Geometrie des Zahnkranzes mit der Gaumenform/Kiefer. Eine ältere Technik ist die manuelle Herstellung des individuellen Löffels. Es wird händisch über das Gipsmodell eine noch nicht durchpolymerisierte Kunststoffplatte darübergelegt und durch händische Verformung angepasst. Anschließend wird die Kunststoffplatte durch z.B. Lichthärtung vollständig durchpolymerisiert.

Danach wird der Scan aus dem vorhergehenden Schritt modifiziert. Das Ziel ist es den individuellen Abformlöffel (Datensystem) so anzupassen, dass die herzustellende Löffelgeometrie unabhängig vom verwendeten Abformmaterial ist. Die Abformmaterialien besitzen unterschiedliche Formgebungsverhalten. Dies liegt im Ausdehnungsverhalten beim Abbindevorgang und in den Verlaufseigenschaften (insbesondere der Viskosität, Topfzeiten, Phasenübergängen, Relaxationsverhalten) im Abformlöffel. Die Genauigkeit des Abbindevorganges hängt weiterhin von den Räumen zwischen dem Gaumen/Kieferbereich und dem Rand des Löffels ab. Hier geht die Fließfähigkeit des Abformmaterials ein, die für die verwendeten Abformmaterialien unterschiedlich ist. Abgestimmt auf diese Materialeigenschaften soll der individuelle Löffel konstruiert werden. Dazu wurden Daten in Bezug auf eine optimale Abformung ermittelt und in die Software für den 3D-Druck und für ein Herstellungsverfahren überführt.

Der Oral-Scan aus Schritt 1 kann und für die geometrische Gestaltung des individuellen Löffels verwendet werden. Zur Anpassung in Bezug auf die Abformmaterialien, die in einem nächsten Schritt am Patienten eingesetzt werden, können die oben genannten Materialverhaltenswerte der in Betracht kommenden Abformmaterialien beispielsweise in eine verwendete Computer-Software eingearbeitet werden (diese Daten können beispielsweise als "gap-Daten" bezeichnet werden). Diese "gap-Daten" definieren die genaue Geometrie des individuellen Abformlöffels, welcher danach im 3D-Druckverfahren hergestellt wird.

Um die Fließeigenschaften des Abformmaterials zu berücksichtigen und zu beeinflussen (im Augenblick des Abformvorganges im Mund des Patienten), trägt der obere Rand des Löffels gemäß einer Weiterentwicklung der Erfindung vorzugsweise eine Umbördelung. Diese hängt von den Fließ-, Erstarrungs, und Formgebungseigenschaften des Abformmaterials ab. Auch hier können beispielsweise empirisch ermittelte Daten in eine geeignete Software für das 3D-Druckverfahren eingebaut werden.

Aus den Daten des vorhergehenden Schrittes wird danach durch 3D-Drucken der individuelle Abformlöffel beispielsweise aus photosensitiven Polyacrylaten (diese stellen ein beispielhaft verwendbares Polymersystem dar) hergestellt.

Der individuelle Abformlöffel wird dann in der Regel dem Zahnarzt zur Anwendung zugesandt. Der Zahnarzt erzeugt hiermit den genauen, das heißt materialspezifischen Abdruck mit hoher Präzision.

Der unter Verwendung des individuellen Abformlöffels erzeugte Abdruck wird dann dem zahntechnischen Unternehmen zugesandt. Hieraus kann der passgenaue Zahnersatz/die Prothese hergestellt werden.

Nachfolgend werden verschiedene bevorzugte Varianten und Weiterbildungen des erfindungsgemäßen Verfahrens sowie die Vorteile der Erfindung im Detail genauer erläutert. Die Abdrucknahme vom Gebiss des Patienten stellt die Arbeitsgrundlage des Dentallabors dar und dient zur Modellherstellung. Mittels einer Abdruckmasse und einem Standard-Abdrucklöffel (Konfektionslöffel) wird eine Negativ-Abformung des Patientengebisses genommen, welche im Anschluss mit Gips ausgegossen wird. So erhält das Labor ein exaktes Positivmodell des Patientengebisses, auf dem im Dentallabor weitergearbeitet wird, um so den Zahnersatz anzufertigen. In der Zahnmedizin gibt es viele Abdruckarten und -techniken, die alle das gleiche Ziel haben: so genau wie möglich Zähne, Präparationen oder Kieferbereiche abzuformen, um sie später mit Gips auszugießen und so eine Arbeitsgrundlage zu schaffen.

Der Abformlöffel stellt ein Hilfsmittel dar und dient als Träger des Abformmaterials. Bei den Abdruckarten unterscheidet man zwischen einem konfektionierten Löffel, hier wird ein industriell hergestellter Löffel in verschiedenen Größen verwendet, und einem individuellen Löffel. Letzterer wird nach vorangegangener Konfektionsabformung individuell für den Patienten auf dem entsprechenden Gipsmodell der Konfektionsabformung hergestellt. Der individuelle Löffel dient vor allem der Funktionsabformung, bei der speziell das Zahnfleisch (Gingiva) bzw. der Funktionsrand abgeformt wird, aber auch bei Präparationsabformungen wird der individuelle Löffel verwendet, wie z.B. zur Herstellung von Kronen oder Brücken, festsitzendem oder herausnehmbarem Zahnersatz bis hin zu implantatgetragenem Zahnersatz.

Trotz Herstellung eines individuellen Abformlöffels kommt es häufig zu Abformfehlern wie z.B. unpräziser Darstellung der Präparationsgrenze, Verzügen oder Luftblasen im Abdruck. All dies kann verschiede Ursachen haben, beispielsweise das bei der Herstellung des individuellen Löffels verwendete Abformmaterial, sowie auch mangelnde Sorgfalt oder Technik des Anwenders bei der Herstellung.

Bei der Herstellung eines individuellen Abformlöffels wird das Gipsmodell aus der vorangegangenen Konfektionsabformung als Arbeitsgrundlage verwendet. Anschließend wird die Einschubrichtung des Löffels bestimmt und die Länge/Kontur des Löffels auf dem Modell angezeichnet. Diese dient als Begrenzung des Löffels. Ein möglicher Restzahnbestand und vorhandene Unterschnitte werden üblicherweise mit Wachs ausgeblockt, wodurch der notwendige Platz für das Abformmaterial entsteht. Anschließend wird eine lichthärtende Kunststoffplatte auf dem Modell adaptiert und die Ränder werden wie angezeichnet beschnitten. Aus dem überschüssigen Material kann ein Löffelgriff geformt und an die Modellation angesetzt werden. Der Löffel wird auf dem Modell im Lichthärtegerät polymerisiert.

Da die einzelnen, zur Löffelherstellung notwendigen, Schritte nicht standardisiert sind und insbesondere das Ausblocken mit Wachs auf dem Modell sehr individuell ist und von dem jeweiligen Geschick des Zahntechnikers abhängt, hat die Anmelderin ein verbessertes Verfahren zur Herstellung eines standardisierten individuellen Abdrucklöffels entwickelt.

In einem ersten Schritt wird das digitale Modell entsprechend der späteren Einschubachse im Mund des Patienten ausgerichtet. Die Software erkennt anhand der Topopgraphie Überhänge und unter sich gehende Bereiche/Areale.

In einem weiteren Arbeitsschritt können in der CAD-Software weitere auszublockende Gebiete definiert/markiert werden. Diese können an den unterschiedlichsten Stellen erforderlich sein, wie zum Beispiel im Bereich des Kieferverlaufes, der Fissuren etc. Die Software blockt dann bis zum höchsten Punkt der markierten Fläche aus.

Als nächstes wird die äußere Randgestaltung (gestrichelte Linie) des Löffels festgelegt, diese dient als Abschluss und gibt den Umriss des individuellen Abformlöffels vor.

Ist dies erledigt, muss ebenfalls Platz für die Abformmasse geschaffen werden. Je nach Abformmasse kann dies variieren. Der Platzhalter für die Abformmasse wird gleichmäßig um Zahn- und Kieferbereich erzeugt. Es gibt zum einen die Möglichkeit einen generellen Platzhalter (gleichmäßig innerhalb der Löffelkontur) oder einen lokalen Platzhalter (hier können einzelne Areale erzeugt werden, welche einen anderen Abstand haben, wie z.B. im zahnlosen Bereich) zu erzeugen. Lokale Platzhalter werden überwiegend für Sammelabdrücke verwendet.

Gemäß der Erfindung wird als ein von dem verwendeten Abformmaterial abhängiger Parameter mindestens ein Abstandsmaß in mm gewählt wird, in dem eine Ausblockung zwischen dem Abformlöffel und einem Kieferbereich und/oder einem Zahnbereich des abgeformten Gebisses vorgesehen ist.

Gemäß der Erfindung wird ein erstes Abstandsmaß in mm gewählt für eine generelle Ausblockung, welches ringsum um den Kiefer am Umfang überall gleichbleibend ist. Zusätzlich kann optional ein zweites variables Abstandsmaß in mm gewählt werden für eine lokale Ausblockung, welches nur im Bereich bestimmter Zähne, insbesondere Backenzähne oder zahnloser Bereiche vorgesehen ist.

Die Ausblockung kann an verschiedenen Bereichen unterschiedlich definiert werden, so dass es zum einen eine generelle Ausblockung gibt, welche sich gleichmäßig über das gesamte Modell (Kiefer und Zahnbestand) erstreckt, als auch einen lokalen Ausblockbereich. Der lokale Bereich stellt zumeist den Bereich der Zahnsituation dar, in dem zum Beispiel aufgrund eines präparieren Zahnes für das Abformmaterial eine andere Stärke der Ausblockung definiert wird. Je nach Abformmaterial können lokale und generelle Ausblockung voneinander abweichen oder die gleichen Werte haben.

Die Anmelderin hat erkannt, dass es auf diese Parameter und insbesondere die Abhängigkeit von Ausblockstärke und Abformmaterial ankommt. Durch die Anwendung der ermittelten Parameter wird ein standardisiertes Abformverfahren sichergestellt und Abformfehler werden vermieden.

In der nachfolgenden Tabelle 1 sind bevorzugte Werte für die verwendeten Parameter angegeben, die jeweils dem entsprechenden Abformmaterial zugeordnet werden können.

**Tabelle 1**

| | Generelle Ausblockung (gleichmäßig über den gesamten Kiefer) | Lokale Ausblockung (im bezahnten Prämolaren,- & Molarenbereich) | Lokale Ausblockung (Zahnlos) |
|---|---|---|---|
| Abformung Kronen/Brücke | | | |
| Doppelmischabformung | 2,0 - 3,0 mm | Abhängig vom Unterschnitt 0,5 - 2,0 mm addiert auf generelle Ausblockung | |
| Korrekturabformung | 2,5 - 4,5 mm | Abhängig vom Unterschnitt 0,5 - 2,0 mm addiert auf generelle Ausblockung | |
| Monophasige Abformung (Impregum) | 2,0 - 3,0 mm | Abhängig vom Unterschnitt 0,5 - 2,0 mm addiert auf generelle Ausblockung | |

| Sammelabformung | | | |
|---|---|---|---|
| Monophasige Abformung (Impregum) | 2,0 - 4,0 | | 2,0 - 5,0 mm |
| A-Silikon | 2,0 - 3,0 | | 2,0 - 5,0 mm |

Die obige Tabelle 1 zeigt, dass das Maß der generellen Ausblockung je nach verwendetem Abformmaterial beispielsweise 2 mm bis 4,5 mm betragen kann.

Gemäß einer bevorzugten Weiterbildung des Verfahrens wird zur Erhöhung des Kompressionsdrucks im Randbereich des Abformlöffels mindestens an dessen dem Gebiss zugewandter Innenseite eine Umbördelung erzeugt, deren Abmessungen in einer oder zwei Raumrichtungen abhängig von den Materialeigenschaften des Abformmaterials gewählt werden.

Ein weiterer wichtiger Aspekt für den Erfolg eines perfekten Abdrucks ist der sogenannte Kompressionsdruck des Abformmaterials im individuellen Löffel, dieser sorgt für die optimale Umfließung des Abformmaterials um die einzelnen Zähne sowie den Kiefer. Da die Abformmassen stark in der Viskosität variieren, ist es oftmals sehr schwer, einen optimalen Kompressionsdruck zu erzeugen. Abhängig ist dies von der verwendeten Abformmasse, dem Platzhalter, dem ausgeblockten Bereich, und vor allem der Randgestaltung. Wird am Rand des Löffels zu wenig Kompressionsdruck erzeugt, kann das Material nicht optimal um die abzuformende Fläche fließen. In dem erfindungsgemäßen Verfahren wurde daher die Randgestaltung optimiert, indem am Rand eine "Umbördelung" designt wurde, mit deren Hilfe ein besserer Kompressionsdruck erzeugt werden konnte. Die Umbördelung kann vorzugsweise in der CAD-Software automatisch am Rand definiert werden. Die Umbördelung wird auf der Innenseite des Löffelrands durch ein in Höhe und Breite definiertes Profil erzeugt, welches an der Löffelwandung erzeugt wird, so dass zum einen ein optimaler Kompressionsdruck entsteht und zum anderen eine zusätzliche Retention für das Abformmaterial.

Die Umbördelung ist vor allem auf der innenliegenden Seite wichtig, da hier der Kompressionsdruck erzeugt wird. Alternativ oder zusätzlich zu der vorgenannten Umbördelung an der Innenseite kann auch zur Erleichterung der Entnahme des Abformlöffels aus dem Mund des Patienten in dessen Randbereich mindestens an dessen dem Gebiss abgewandter Außenseite eine Umbördelung erzeugt werden, deren Abmessungen in einer oder zwei Raumrichtungen abhängig von den Materialeigenschaften des Abformmaterials gewählt werden.

In der nachfolgenden Tabelle sind bevorzugte Werte für die vorgenannten Parameter angegeben. Die Abhängigkeit von der Umbördelung und dem daraus resultierenden Kompressionsdruck sind wesentliche Aspekte gemäß einer bevorzugten Variante der vorliegenden Erfindung. Durch sie wird ein standardisiertes Abformverfahren sichergestellt und Abformfehler werden verringert.

**Tabelle 2**

| | Umbördelung Abstand Dicke (a) Innenseite | Umbördelung Abstand Höhe (b) Innenseite | Umbördelung Abstand Dicke (a) Außenseite | Umbördelung Abstand Höhe (b) Außenseite |
|---|---|---|---|---|
| Abformung Kronen/Brücke | | | | |
| Doppelmischabformung | 1,0 - 1,5 mm | 1,0 - 3,0 mm | 2,0 - 3,0 mm | 2,0 - 3,0 mm |
| Korrekturabformung | 2,0 - 2,5 mm | 1,0 - 3,0 mm | 2,0 - 3,0 mm | 2,0 - 3,0 mm |
| Monophasige Abformung (Impregum) | 0,75 - 1,5 mm | 1,0 - 3,0 mm | 2,0 - 3,0 mm | 2,0 - 3,0 mm |

| Sammelabformung | | | | |
|---|---|---|---|---|
| Monophasige Abformung (Impregum) | 1,0 - 2,0 mm | 1,0 - 3,0 mm | 2,0 - 3,0 mm | 2,0 - 3,0 mm |
| A-Silikon | 1,0 - 2,0 mm | 1,0 - 3,0 mm | 2,0 - 3,0 mm | 2,0 - 3,0 mm |

Die obige Tabelle 2 zeigt, dass die Dicke der Umbördelung an der Innenseite je nach verwendetem Abformmaterial beispielsweise 0,75 mm bis 2,5 mm betragen kann und die Höhe der Umbördelung beispielsweise 1 mm bis 3 mm betragen kann. Die Umbördelung an der Außenseite kann je nach Abformmaterial beispielsweise eine Dicke von 2 mm bis 3 mm aufweisen und eine Höhe von ebenfalls beispielsweise 2 mm bis 3 mm haben.

Gemäß einer bevorzugten Weiterbildung der vorliegenden Erfindung wird zur weiteren Verbesserung der Retention für die Abformmasse der individuelle Löffel bereichsweise mit Löchern versehen. Auch diese werden an das Abformmaterial angepasst, je nach Fließverhalten wird der Durchmesser der Löcher vergrößert oder verringert. Die Löcher werden als Zylinder oder als Konus im individuellen Abformlöffel erzeugt. Letzteres bietet eine zusätzliche Retention für das Abformmaterial. Auch die Anzahl der Löcher ist von Bedeutung für ein optimales Fließverhalten und die Erzeugung des gewünschten Kompressionsdrucks.

Die Lochverteilung erfolgt vorzugsweise in mehreren Bereichen des individuellen Löffels. So werden die Löcher insbesondere auf der Vestibulärfläche gleichmäßig verteilt. Bei einem Oberkiefer wird der Lochbereich im palatinalen Bereich erweitert (Zusatzretentionen auf Höhe der Gaumenfalten), wobei die genaue Lage von Anwender zu Anwender variieren kann. Ebenso können im Oberkiefer im Bereich der Ah-Linie einzelne Löcher entlang der Ah-Linie gesetzt werden. Diese Erweiterung stellt einen zusätzlichen Retentionsbereich für das Abformmaterial dar.

Im Unterkiefer genügt es in der Regel, die Retentionen gleichmäßig im vestibulären und lingualen Bereich zu verteilen.

Generell zeigte der Praxistest, dass es im Falle einer Sammelabformung mit Teleskopen zu Lufteinschlüssen okklusal des Teleskops kommen kann. Aus diesem Grund wird in diesem Bereich ebenfalls ein Loch erzeugt. In der nachfolgenden Tabelle 3 sind bevorzugte Werte für die Lochdurchmesser sowie die Lochabstände angegeben.

**Tabelle 3**

| | Lochdurchmesser (Innenseite) | Lochdurchmesser Teleskope okklusal | Lochdurchmesser (Aussenseite) | Lochabstand |
|---|---|---|---|---|
| Abformung Kronen/Brücke | | | | |
| Doppelmischabformung | 2,0 - 3,5 mm | | 2,0 - 3,5 mm | 1 - 3 mm |
| Korrekturabformung | 2,0 - 3,5 mm | | 2,0 - 3,5 mm | 1 - 3 mm |
| Monophasige Abformung (Impregum) | 2,0 - 3,5 mm | | 2,0 - 3,5 mm | 1 - 3 mm |

| Sammelabformung | | | | |
|---|---|---|---|---|
| Monophasige Abformung (Impregum) | 2,0 - 3,5 mm | 1,0 - 3,0 mm | 2,0 - 3,5 mm | 1 - 3 mm |
| A-Silikon | 1,0 - 3,5 mm | 1,0 - 3,0 mm | 1,0 - 3,5 mm | 1 - 3 mm |

Die obige Tabelle 3 zeigt, dass der Lochdurchmesser je nach verwendetem Abformmaterial beispielsweise an der Innenseite 1 mm bis 3,5 mm betragen kann und beispielsweise an der Außenseite 1 mm bis 3,5 mm betragen kann. Die Lochabstände zwischen den Löchern können beispielsweise bei 1 mm bis 3 mm liegen.

Im Material des individuellen Abformlöffels können beispielsweise zylindrische und/oder konische Löcher erzeugt werden.

Als Druckmaterial (3D-Druckkunststoffe) wurden im Rahmen von Versuchen im Zusammenhang mit der vorliegenden Erfindung beispielsweise lichthärtende Acrylate verwendet.

Für die Herstellung der Gipsmodelle wurden beispielsweise verschiedene Modellhartgipse unterschiedlicher Härte eingesetzt.

Eine größere Herausforderung stellt die Abformung bei Implantat getragenem Zahnersatz da. Da die Position des Implantats zu diesem Zeitpunkt der Erstabformung mit bisherigen Abdruckmethoden nur sehr unzureichend/ungenau erfasst wird, hat die Anmelderin im Rahmen einer Weiterentwicklung der vorliegenden Erfindung auch für diese Anwendungsfälle ein verbessertes Verfahren entwickelt.

Gegenstand einer Weiterbildung der vorliegenden Erfindung ist in den Fällen, in denen das abzuformende Gebiss mindestens ein Implantat umfasst, ein Verfahren zur Erfassung der Position des Implantats bei dem zunächst an der Stelle des Implantats ein Pre-Abformpfosten oder eine Einheilkappe befestigt wird (beispielsweise durch Verschrauben), der dann mit dem Gebiss abgeformt wird, wobei anhand dieser Abformung ein Gipsabdruck als Positivmodell erzeugt wird, welches anschließend abgescannt wird oder alternativ direkt ein Oral-Scan des Gebiss- und Gaumenbereichs mit dem Pre-Abformpfosten angefertigt wird, wobei der Pre-Abformpfosten danach gegen einen digital vorliegenden Original-Abformpfosten ausgetauscht wird und wobei dann anhand der zuvor gewonnenen Daten mittels 3D-Druck ein individueller Abformlöffel einschließlich Abformung des Implantats und Modifizierung der für den Oral-Scan erhaltenen Daten mittels wenigstens eines für eine Materialeigenschaft des Abformmaterials spezifischen Parameters gestaltet wird.

Um die dreidimensionale Position des Implantats im Kiefer exakt übertragen zu können, wird ein Pre-Abformpfosten verwendet (hier kann beispielsweise vom Zahnarzt eine aus der Implantologie bekannte Einheilkappe verwendet werden). Die Höhe der Einheilkappe sollte dabei nicht höher als die eigentliche Zahnreihe sein, damit die Erstabformung, die ebenfalls mit einem Konfektionsabformlöffel erfolgt, nicht beeinträchtigt wird. Die Erstabformung kann aber auch wie oben bereits beschrieben rein digital mittels Intraoralscanner erfolgen. Im Falle der Konfektionsabformung wird der Abdruck wieder mit Gips aufgefüllt und das so entstandene Modell mit einem Laborscanner digitalisiert, so dass nun wieder alle Informationen in digitaler Form vorliegen.

Anhand der Einheilkappe kann nun die genaue Lage und Position des Implantats im Kiefer bestimmt werden. Da die Einheilkappe ebenfalls in digitaler Form vorliegt, kann in der von der Anmelderin verwendeten Software die Einheilkappe durch den später bei der individuellen Abformung verwendeten Original-Abformpfosten ausgetauscht werden.

Somit kann der Original-Abformpfosten lagerichtig zugeordnet werden und hat nun die identische Position wie später im Mund des Patienten. Auf Grundlage dieser Daten kann nun der individuelle Abformlöffel unter Berücksichtigung der Einschubachse und der erforderlichen Parameter (insbesondere Ausblockung, Höhe, mit oder ohne Öffnung) für die offene oder geschlossene Abformung erstellt werden.

Dadurch ist es möglich, einen individuellen Abformlöffel für die Implantatabformung zu erstellen, der ohne zeitaufwendige Nacharbeit des Behandlers im Mund des Patienten passt. Bei der offenen Abformung muss der Abformlöffel nach oben ein Loch haben, um die Schraube des Original-Abformpfostens nach der Abformung zu lösen. Daher muss der individuelle Abformlöffel an der exakt richtigen Position für den Original-Abformpfosten geöffnet sein. Die Öffnung wird durch die Lage des Original-Abformpostens vorgegeben und stellt eine Vergrö-βerung der oberen Geometrie des Abformpfostens dar.

Als Abformmaterial kann im Rahmen des erfindungsgemäßen Verfahrens beispielsweise ein monophasiges Abformmaterial, ein duophasiges Abformmaterial, ein Doppelmischmaterial oder ein Alginat verwendet werden, um nur einige geeignete Materialien zu nennen.

Als Druckmaterial kann im Rahmen des erfindungsgemäßen Verfahrens insbesondere ein spezifischer 3D-Druckkunststoff verwendet werden, welcher speziell auf das erfindungsgemäße Verfahren abgestimmt ist. Hier sind wie oben erwähnt beispielsweise lichthärtende Acrylate geeignet.

Für die Herstellung des Gipsmodells kommen verschiedene bei der Anmelderin eingesetzte Gipszusammensetzungen in Betracht. Diese unterscheiden sich in der Härte, wobei im Rahmen der Erfindung bevorzugt Gipse der Klasse 3 (Modellhartgips) und Klasse 4 (Superhartgips) verwendet werden. Diese Klassifizierung entspricht der DIN-Norm DIN EN ISO 6873. Darin werden hohe Festigkeitswerte und geringe Expansionswerte für Dentalgips festgelegt. Erreicht werden diese Eigenschaften durch bestimmte Mischungen von Calciumsulfat-hemihydrat, Caliumsulfat-dihydrat und wasserfreiem Calciumsulfat (Anhydrit). Zusätze zu diesen Gipsen in sehr geringen Mengen von weniger als 1 % sind im Rahmen der Erfindung möglich. Ebenso können Farbstoffe in geringen Mengen zugesetzt werden.

Dem Abformmaterial kann ein Entspannungsmittel beigefügt werden, wobei zum Beispiel neutrale Tenside in Wasser geeignet sind.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch stark vereinfachte Darstellung eines einzelnen Zahns im Kiefer;
Figur 2 eine ähnliche schematisch stark vereinfachte Darstellung eines einzelnen Zahns im Kiefer;
Figur 3 eine schematisch vereinfachte Draufsicht auf einen Teil eines Gebisses;
Figur 4 eine schematisch vereinfachte Darstellung eines Abformlöffels im Schnitt mit einem abzuformenden Zahn;
Figur 5 eine ähnliche schematische Darstellung wie in Figur 4;
Figur 6 eine weitere schematisch vereinfachte Darstellung eines Abformlöffels im Schnitt mit einem abzuformenden Zahn;
Figur 7 eine ähnliche schematische Darstellung wie in Figur 6;
Figur 8 eine weitere schematisch vereinfachte Darstellung eines Abformlöffels im Schnitt mit einem abzuformenden Zahn;
Figur 9 eine schematisch vereinfachte Darstellung eines Teilausschnitts eines Gebisses mit einem Implantat;
Figur 10 eine ähnliche schematische Ansicht wie in Figur 9;
Figur 11 eine ähnliche schematische Ansicht wie in Figur 10;
Figur 12 eine Draufsicht auf einen Teilausschnitt eines Abformlöffels zur Abformung eines Gebisses mit einem Implantat.

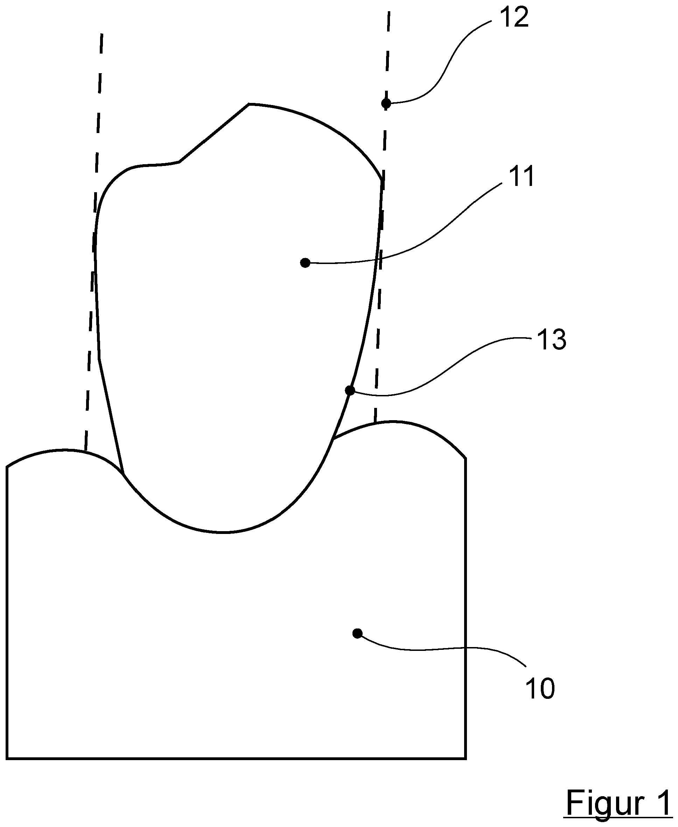

Zunächst wird auf die Figur 1 Bezug genommen und anhand dieser werden die ersten Schritte des erfindungsgemäßen Verfahrens näher erläutert. In der Abbildung gemäß Figur 1 ist ein Ausschnitt aus dem Kiefer 10 mit einem einzelnen Zahn 11 des abzuformenden Gebisses dargestellt. Die Einschubrichtung, in der der Abformlöffel eingeschoben wird, ist mit dem Bezugszeichen 12 bezeichnet. Diese Einschubrichtung 12 entspricht im Wesentlichen der Höhenrichtung der Zähne. Man erkennt in Figur 1, dass es Überhänge/Unterschnitte 13 an den einzelnen Zähnen 11 gibt, da diese in der Regel nach unten hin schmaler werden. Diese Überhänge/Unterschnitte werden bei der Abformung ausgeblockt. Je nach Abformmaterial gibt es unterschiedliche Anforderungen an einen individuellen Abformlöffel, wie zum Beispiel die Randgestaltung, die Dicke der Ausblockung, die Gestaltung und Form des Abformlöffels sowie den Durchmesser und die Positionierung der Löcher.

Grundlage des erfindungsgemäßen Verfahrens ist die vorangegangene Erstabformung des Kiefers. Diese kann entweder mittels eines Konfektionslöffels oder in digitaler Form mittels Intraoralscanner erfolgen. Die Konfektionsabformung wird mit Gips ausgegossen und das entstandene Gipsmodell ebenfalls mit einem 3D-Scanner digitalisiert, so dass zu diesem Zeitpunkt beide Abformarten in digitaler Form vorliegen. Die hier genannten beiden Arten der Abformung sind soweit Stand der Technik.

Gemäß der vorliegenden Erfindung wird nun aber das digitale Kiefermodell an eine speziell programmierte CAD-Software übergeben. Mittels dieser CAD-Software wird nun der individuelle Abformlöffel designt. Der Benutzer kann in der Software insbesondere die unterschiedlichen Abformmaterialien, beispielsweise monophasige-, duophasige-, Doppelmisch-, Korrekturabformung oder Alginatabformung auswählen. Entsprechend dieser Auswahl sind in der Software die unterschiedlichen Anforderungen an den individuellen Abformlöffel hinterlegt. Diese Anforderungen und deren Weiterverarbeitung sind Gegenstand des erfindungsgemäßen Verfahrens.

Im ersten Schritt wird das digitale Modell entsprechend der späteren Einschubachse (Einschubrichtung 12) im Mund des Patienten ausgerichtet. Die Software erkennt anhand der Topographie Überhänge 13 und unter sich gehende Bereiche/Areale.

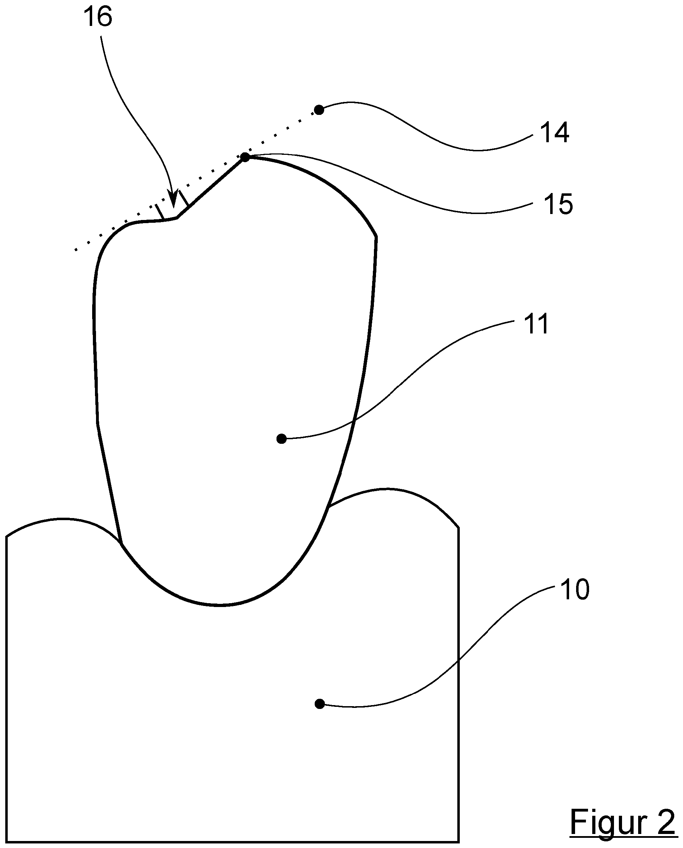

In Figur 2, auf die nachfolgend Bezug genommen wird, erkennt man, dass beispielsweise oberseitig am Zahn im Bereich der Kaufläche ein mit einer zum Beispiel geneigten Hilfslinie 14 markierter Bereich 16, in dem der Zahn 11 eine Vertiefung hat, virtuell bis zum höchsten Punkt der Markierung ausgeblockt werden kann, das heißt in diesem Beispiel bis zu der Höckerspitze 15 des Zahnes 11. Dieser markierte Bereich 16 wird somit in einem weiteren Arbeitsschritt ausgeblockt. Daneben können weitere auszublockende Gebiete definiert und markiert werden. Diese können an den unterschiedlichsten Stellen erforderlich sein, wie zum Beispiel im Bereich des Kieferverlaufes, der Fissuren etc.

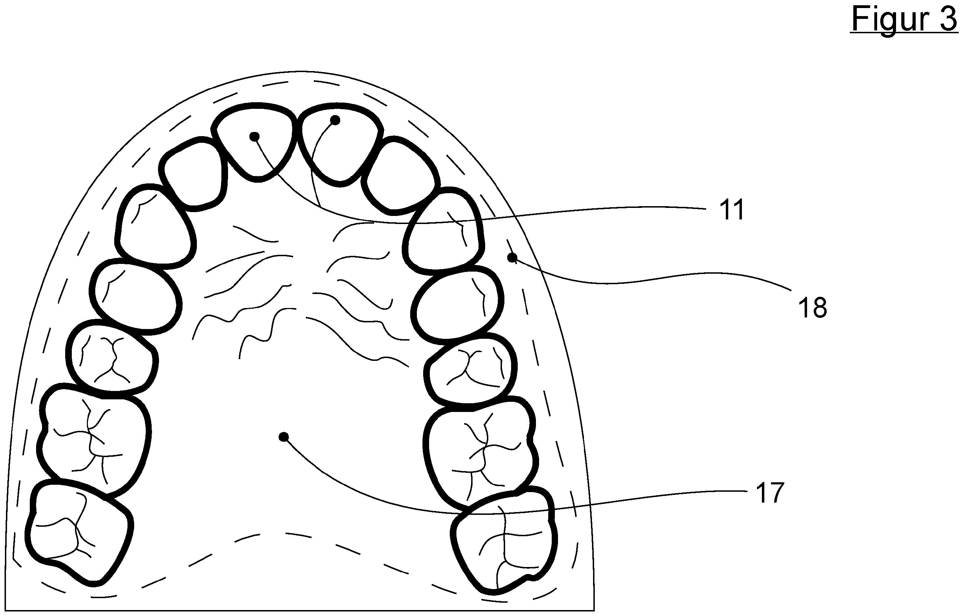

Nachfolgend wird auf die Figur 3 Bezug genommen. Diese zeigt in der Draufsicht beispielsweise den Oberkiefer 17 eines abzuformenden Gebisses, welcher eine Mehrzahl von Zähnen 11 aufweist. In dem erfindungsgemäßen Verfahren wird die äußere Randgestaltung des herzustellenden Abformlöffels festgelegt. Der Umriss 18 (äußere Rand) des herzustellenden individuellen Abformlöffels, der eine durchaus unregelmäßige Umrisslinie aufweist, ist in Figur 3 mit einer gestrichelten Linie 18 dargestellt. Man sieht, dass diese Umrisslinie 18 des individuellen Abformlöffels von derjenigen eines Standardabformlöffels abweicht.

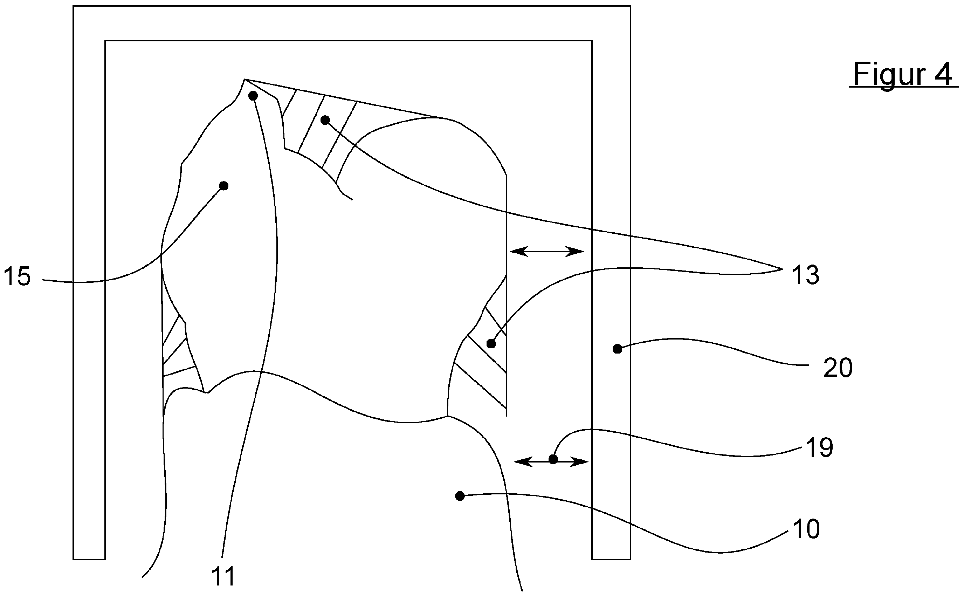

Figur 4, auf die nachfolgend Bezug genommen wird, zeigt in schematisch vereinfachter Form im Längsschnitt einen Teilausschnitt eines Abformlöffels 20, wobei man die jeweilige Abstandssituation zu dem abzuformenden Zahn 11 bzw. zum Kiefer 10 erkennen kann. Der beispielsweise im unteren Bereich mit dem Doppelpfeil 19 gekennzeichnete Zwischenraum zwischen dem Kiefer 10 und der Innenseite des Abformlöffels 20 definiert den Platz, welcher für das Abformmaterial zur Verfügung steht. Hier kann man ein von den spezifischen Materialeigenschaften des Abformmaterials abhängiges Abstandsmaß bei der Erstellung des individuellen Abformlöffels mit einbeziehen, wobei dies ein erstes Abstandsmaß für eine generelle Ausblockung sein kann, welche ringsum gleichmäßig zwischen dem Kieferbereich 10 und dem Abformlöffel 20 vorgesehen ist (siehe Doppelpfeil 19). Dieses erste Abstandsmaß 19 für die generelle Ausblockung kann auch weiter oberhalb zwischen der größten seitlichen Ausdehnung des Zahns 11 und der Innenseite des Abformlöffels 20 vorgesehen sein, wie in Figur 4 durch den dort ebenfalls eingezeichneten Doppelpfeil kenntlich gemacht ist. In Figur 4 erkennt man außerdem Überschnitte/Unterschnitte 13 im Bereich des Zahnhalses sowie tiefer liegende Bereiche16 der Kaufläche des Zahns 11 zwischen zwei Höckern 15, die ebenfalls automatisch ausgeblockt werden können.

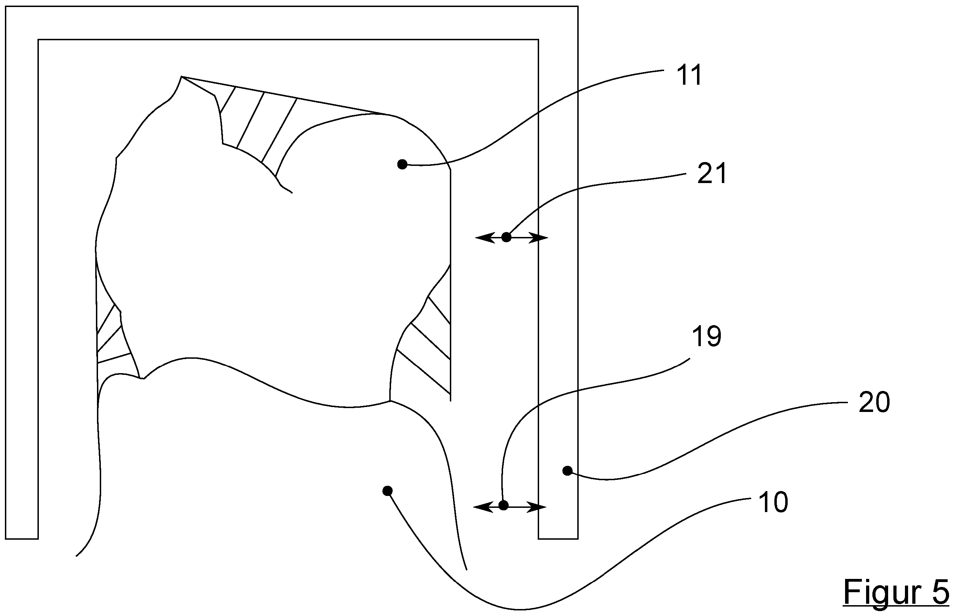

Figur 5 zeigt eine ähnliche Ansicht wie in Figur 4, wobei hier zusätzlich zu dem zuvor beschriebenen generellen Ausblockbereich entsprechend dem Abstand zwischen Kiefer und Abformlöffel 20 in Höhe des Doppelpfeils 19, der ringsum am Anfang gleichmäßig angenommen wird, noch ein lokaler Ausblockbereich gemäß dem oberen Doppelpfeil 21 vorgesehen ist, da hier im Bereich der Zahnsituation, beispielsweise aufgrund eines präparierten Zahns 11 für das Abformmaterial eine andere Stärke der Ausblockung definiert wird. In der oben wiedergegebenen Tabelle 1 werden beispielhafte Werte für das Maß der generellen Ausblockung einerseits sowie auch das der lokalen Ausblockung für verschiedene bei der Abformung verwendete Materialien angegeben.

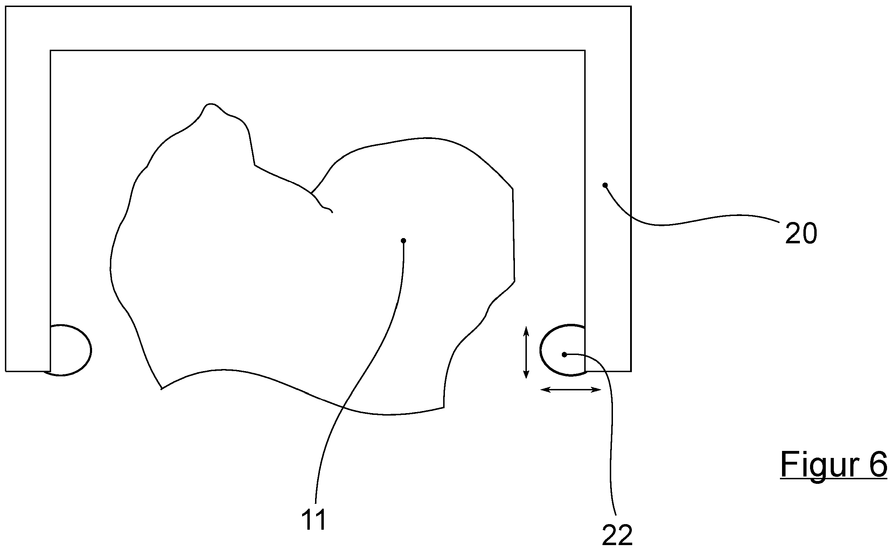

Figur 6, auf die nachfolgend Bezug genommen wird, zeigt eine ähnliche Ansicht wie Figur 5, wobei hier eine beispielhafte alternative Variante der Erfindung erläutert wird. Hier wird eine Umbördelung 22 am Rand an der Innenseite des Abformlöffels 20 angeordnet, mit deren Hilfe ein besserer Kompressionsdruck auf die Abformmasse erzeugt werden kann. Die Umbördelung kann vorzugsweise in der CAD-Software automatisch am Rand definiert werden. Die Umbördelung 22 wird auf der Innenseite des Rands des Abformlöffels 20 durch ein in Höhe und Breite definiertes Profil an der Wandung des Abformlöffels 20 erzeugt. Diese Umbördelung 22 hat wie in Figur 6 durch zwei Pfeile angedeutet im Prinzip Abmessungen in zwei Raumrichtungen, die hier relevant sind, einmal in Richtung der Höhe des Zahns 11 und einmal quer zu dieser Höhenrichtung, das heißt in Richtung des Abstands zwischen dem Zahn und der Wandung des Abformlöffels 20.

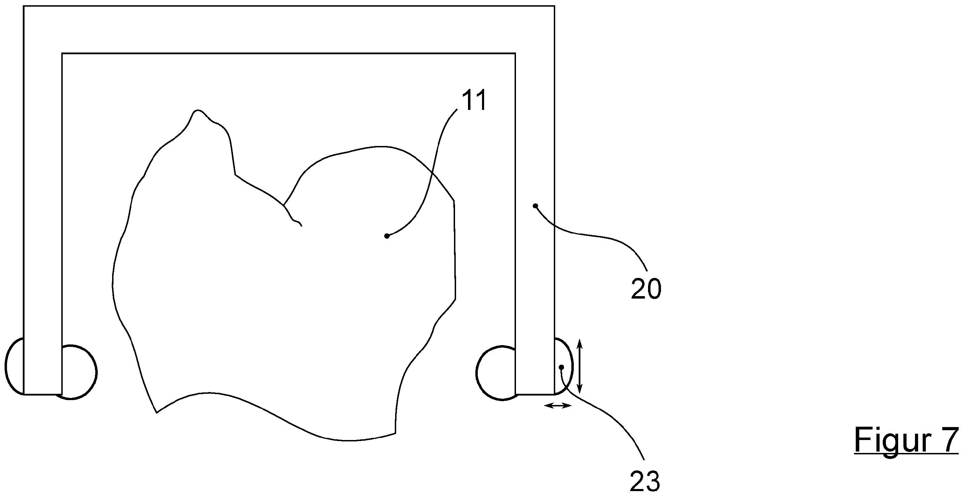

Die Ausführungsvariante gemäß Figur 6 zeigt eine solche Umbördelung 22 auf der innenliegenden Seite des Abformlöffels 20, wo sie wichtig ist, da hier der Kompressionsdruck erzeugt wird. Zusätzlich oder auch alternativ kann eine Umbördelung 23 aber auch auf der Außenseite erzeugt werden, was eine bessere Entnahme des individuellen Löffels aus dem Mund ermöglicht. Diese Variante ist in Figur 7 dargestellt. Auch hier sind die beiden relevanten Abmessungen, zum einen in Richtung der Höhe des Zahns 11 und zum anderen in Richtung quer dazu durch zwei Pfeile jeweils angedeutet. Beispielhafte Werte für Maße der Umbördelungen 22 bzw. 23 an der Innenseite und an der Außenseite sind für verschiedene Abformmaterialien in der obigen Tabelle 2 angegeben.

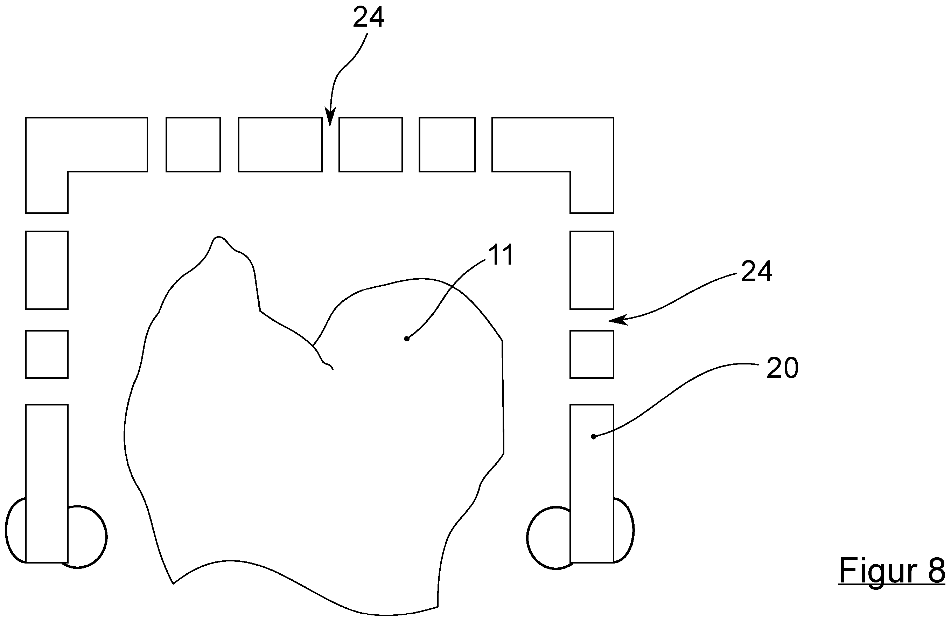

Nachfolgend wird unter Bezugnahme auf die Figur 8 ein weiteres alternatives Ausführungsbeispiel der vorliegenden Erfindung näher erläutert. Bei dieser Variante der Erfindung wird unter anderem zur weiteren Verbesserung der Retention für die Abformmasse der individuelle Abformlöffel 20 bereichsweise mit Löchern 24 versehen. Auch diese Löcher werden abhängig von den Parametern des jeweils verwendeten Abformmaterials gewählt, wobei insbesondere je nach dessen Fließverhalten der Durchmesser der Löcher 24 vergrößert oder verringert wird. Die Löcher 24 können beispielsweise in Form eines Zylinders oder als Konus im individuellen Abformlöffel 20 erzeugt werden. Letzteres bietet eine zusätzliche Retention für das Abformmaterial. Die Lochverteilung erfolgt vorzugsweise in mehreren Bereichen des individuellen Abformlöffels 20. In dem Ausführungsbeispiel gemäß Figur 8 sind Löcher 24 sowohl auf der Außenseite der Zahnreihe (vestibulär) als auch auf der Innenseite der Zahnreihe (oral) vorgesehen. Außerdem sind auch Löcher in der Fläche des Abformlöffels 20 vorgesehen, die sich oberhalb der Kauflächen der Zähne befindet. In der oben wiedergegebenen Tabelle 3 sind bevorzugte Werte für die Lochdurchmesser sowie Lochabstände bei Verwendung verschiedener Abformmaterialien angegeben.

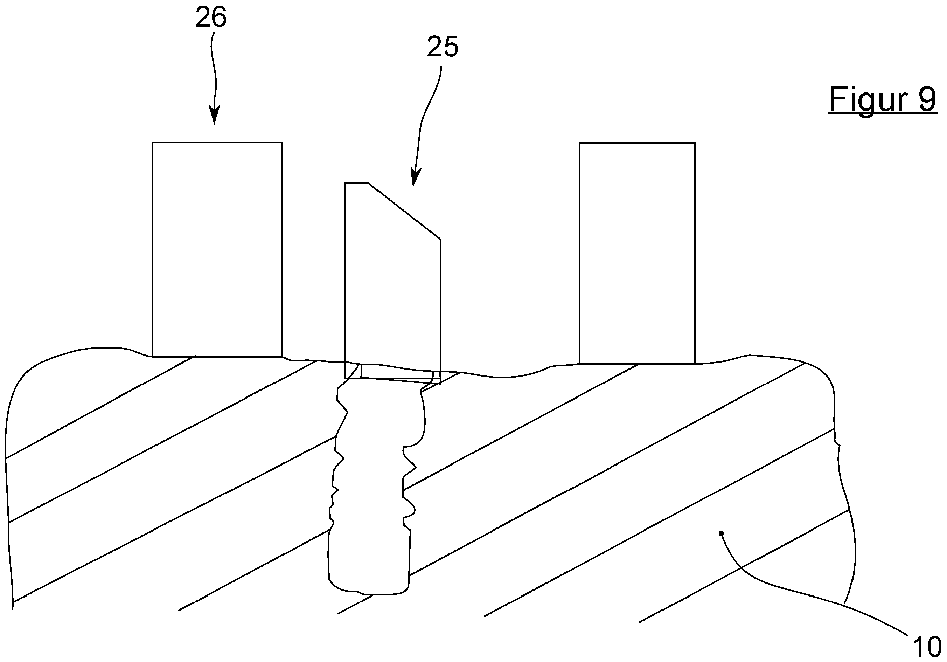

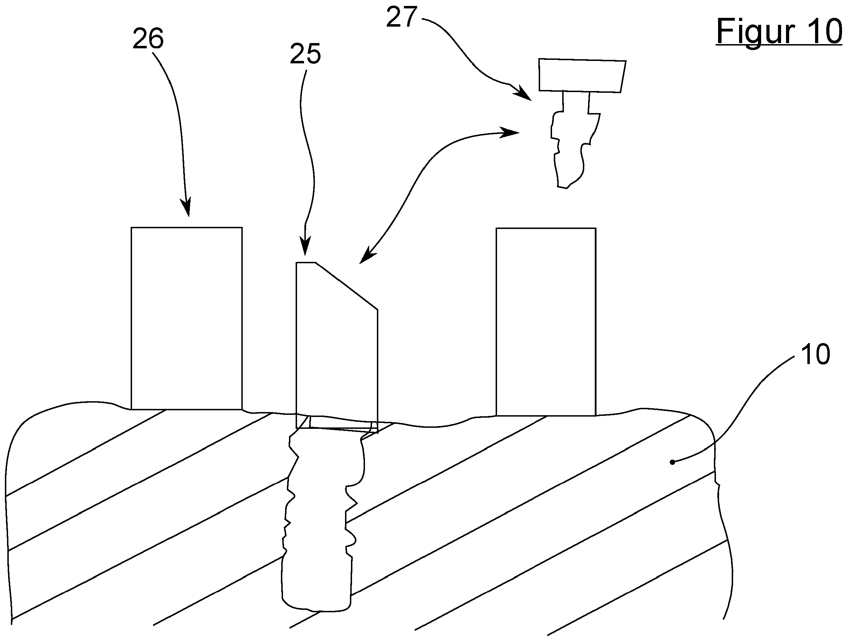

Nachfolgend wird unter Bezugnahme auf die Figuren 9 bis 12 ein weiteres Ausführungsbeispiel der vorliegenden Erfindung näher erläutert. Um die dreidimensionale Position des Implantats im Kiefer exakt übertragen zu können, wird ein Pre-Abformpfosten 25 verwendet (hier kann beispielsweise vom Zahnarzt eine aus der Implantologie bekannte Einheilkappe verwendet werden). Die Höhe der Einheilkappe 25 sollte dabei nicht höher als die eigentliche Zahnreihe 26 sein, damit die Erstabformung, die ebenfalls mit einem Konfektionsabformlöffel erfolgt, nicht beeinträchtigt wird. Anhand der Einheilkappe 25 kann nun die genaue Lage und Position des Implantats im Kiefer bestimmt werden. Da die Einheilkappe 25 ebenfalls in digitaler Form vorliegt, kann in der von der Anmelderin verwendeten Software die Einheilkappe 25 durch den später bei der individuellen Abformung verwendeten Original-Abformpfosten 27 ausgetauscht werden, was in der Figur 10 dargestellt ist.

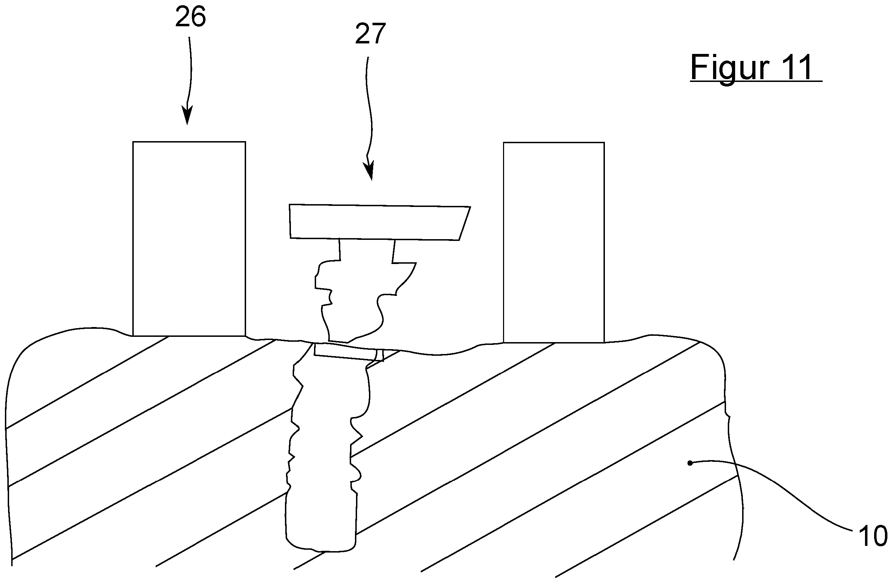

Somit kann der Original-Abformpfosten 27 lagerichtig zugeordnet werden und hat nun die identische Position wie später im Mund des Patienten. Der Kiefer nach dem Austausch mit dem Original-Abformpfosten 27 ist in Figur 11 dargestellt. Auf Grundlage dieser Daten kann nun der individuelle Abformlöffel unter Berücksichtigung der Einschubachse und der erforderlichen Parameter (insbesondere Ausblockung, Höhe, mit oder ohne Öffnung) für die offene oder geschlossene Abformung erstellt werden.

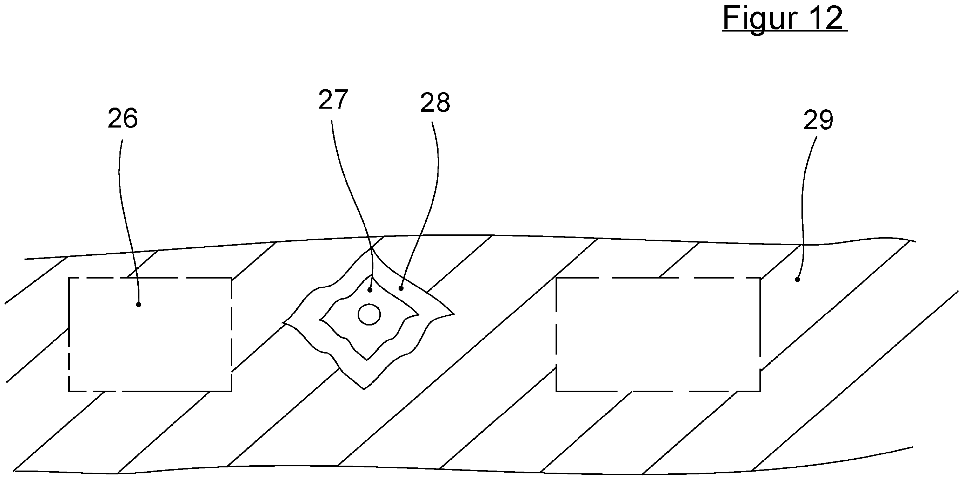

In Figur 12 ist eine Draufsicht auf einen Ausschnitt eines individuellen Abformlöffels 29 für die Abformung eines Gebisses mit eingesetztem Original-Abformpfosten 27 dargestellt. Man erkennt zwei Zähne 26 im Kiefer des Patienten unterhalb des Abformlöffels 29, welche gestrichelt dargestellt sind. Weiterhin erkennt man eine Aussparung 28 im Abformlöffel, die um den Original-Abformpfosten 27 herum liegt. Diese Aussparung 28 (Loch) im Abformlöffel ist erforderlich, um die Schraube des Original-Abformpfostens nach der Abformung lösen zu können. Andernfalls wäre es nicht möglich, nach der Aushärtung der Abformmasse den Abformlöffel von dieser zu trennen, das heißt zu entformen. Durch die Aussparung 28 hat der Zahntechniker Zugang zu dem Original-Abformpfosten 27 und kann dessen Verbindung mit dem Implantat im Kiefer des Patienten lösen. Der Original-Abformpfosten verbleibt dann in der Abformmasse.

Daher muss der individuelle Abformlöffel 29 an der exakt richtigen Position für den Original-Abformpfosten 27 geöffnet sein. Die Öffnung (Aussparung 28) wird durch die Lage des Original-Abformpostens 27 vorgegeben und stellt eine Vergrößerung der oberen Geometrie des Abformpfostens 27 dar.

### Bezugszeichenliste

- 10: Kiefer
- 11: Zahn
- 12: Einschubrichtung
- 13: Überhänge/Unterschnitte
- 14: Hilfslinie
- 15: Höckerspitze, höchster Punt des Zahnes
- 16: markierter Bereich für die Ausblockung
- 17: Oberkiefer
- 18: gestrichelte Umrisslinie
- 19: Doppelpfeil
- 20: Abformlöffel
- 21: Doppelpfeil
- 22: Umbörderlung
- 23: Umbördelung
- 24: Löcher
- 25: Pre-Abformpfosten, Einheilkappe
- 26: Zahnreihe
- 27: Original-Abformpfosten
- 28: Aussparung
- 29: individueller Abformlöffel

## Patentansprüche

1. Verfahren zur Herstellung eines individuellen zahnärztlichen Abformlöffels, bei dem zunächst entweder mittels eines geeigneten Abformmaterials und eines Standardlöffels ein Abdruck des Gebisses und des Gaumenbereichs des Patienten geformt und anhand dieser Abformung ein Gipsabdruck als Positivmodell erzeugt wird, welches anschließend abgescannt wird oder alternativ direkt ein Oral-Scan des Gebiss- und Gaumenbereichs angefertigt wird, wobei danach anhand der zuvor gewonnenen Daten mittels 3D-Druck ein individueller Abformlöffel hergestellt wird, wobei
das anhand der zuvor gewonnenen Daten erhaltene digitale Kiefermodell an eine speziell programmierte CAD-Software übergeben und mittels dieser CAD-Software der individuelle Abformlöffel designt wird, **dadurch gekennzeichnet,**
**dass** in der Software, aus einer Mehrzahl unterschiedlicher Abformmaterialien,
das zu verwendende Abformmaterial gewählt wird, und
die durch den Scan vom Modell oder intraoral erhaltenen Daten mittels wenigstens eines für eine Materialeigenschaft des ausgewählten Abformmaterials spezifischen Parameters modifiziert werden und anhand dieser modifizierten Daten der individuelle Abformlöffel gestaltet wird,
wobei als ein von dem verwendeten Abformmaterial abhängiger Parameter mindestens ein Abstandsmaß (19) in mm gewählt wird, in dem eine Ausblockung zwischen dem Abformlöffel (20) und einem Kieferbereich (10) und/oder einem Zahnbereich (11) des abgeformten Gebisses vorgesehen ist,
wobei dieses mindestens eine Abstandsmaß ein erstes Abstandsmaß (19) in mm ist für eine generelle Ausblockung, welches ringsum um den Kiefer (10) am Umfang überall gleichbleibend ist.

2. Verfahren nach Anspruch 1, **dadurch gekennzeichnet, dass** ein zweites variables Abstandsmaß (21) in mm gewählt wird für eine lokale Ausblockung, welches nur im Bereich bestimmter Zähne (11), insbesondere Backenzähne oder zahnloser Bereiche vorgesehen ist.

3. Verfahren nach Anspruch 2, **dadurch gekennzeichnet, dass** das zweite, variable Abstandsmaß (21) für die lokale Ausblockung in den betroffenen Bereichen jeweils zu dem ersten Abstandsmaß (19) für die generelle Ausblockung addiert wird, um ein Gesamtmaß für die Ausblockung zu erhalten.

4. Verfahren nach einem der Ansprüche 1 bis 3, **dadurch gekennzeichnet, dass** zur Erhöhung des Kompressionsdrucks im Randbereich des Abformlöffels mindestens an dessen dem Gebiss zugewandter Innenseite eine Umbördelung (22) erzeugt wird, deren Abmessungen in einer oder zwei Raumrichtungen abhängig von den Materialeigenschaften des Abformmaterials gewählt werden.

5. Verfahren nach Anspruch 4, **dadurch gekennzeichnet, dass** die Höhe der Umbördelung (22) an der Innenseite in Richtung der Höhenerstreckung der Zähne und die Breite der Umbördelung an der Innenseite in Richtung quer zur Höhenerstreckung der Zähne abhängig von den Materialeigenschaften des Abformmaterials variabel gewählt wird.

6. Verfahren nach einem der Ansprüche 1 bis 5, **dadurch gekennzeichnet, dass** zur Erleichterung der Entnahme des Abformlöffels aus dem Mund des Patienten in dessen Randbereich mindestens an dessen dem Gebiss abgewandter Außenseite eine Umbördelung (23) erzeugt wird, deren Abmessungen in zwei Raumrichtungen abhängig von den Materialeigenschaften des Abformmaterials gewählt werden.

7. Verfahren nach Anspruch 6, **dadurch gekennzeichnet, dass** die Höhe der Umbördelung (23) an der Außenseite in Richtung der Höhenerstreckung der Zähne und die Breite der Umbördelung (23) an der Außenseite in Richtung quer zur Höhenerstreckung der Zähne abhängig von den Materialeigenschaften des Abformmaterials variabel gewählt wird

8. Verfahren nach einem der Ansprüche 1 bis 7, **dadurch gekennzeichnet, dass** zur Verbesserung der Retention der Abformmasse der individuelle Abformlöffel (20) wenigstens bereichsweise mit Löchern (24) versehen wird, deren Durchmesser und/oder deren Anzahl und/oder deren Abstände untereinander abhängig von den jeweiligen Materialeigenschaften des Abformmaterials variabel gewählt wird.

9. Verfahren nach Anspruch 8, **dadurch gekennzeichnet, dass** zylindrische und/oder konische Löcher (24) im Material des individuellen Abformlöffels (20) erzeugt werden.

10. Verfahren nach einem der Ansprüche 8 oder 9, **dadurch gekennzeichnet, dass** Löcher (24) auf der Vestibulärfläche und/oder bei einem Oberkiefer im palatinalen Bereich und/oder bei einem Oberkiefer im Bereich der Ah-Linie erzeugt werden.

11. Verfahren nach einem der Ansprüche 1 bis 10, bei dem das abzuformende Gebiss mindestens ein Implantat umfasst, **dadurch gekennzeichnet, dass** zur Erfassung der Position des Implantats zunächst an der Stelle des Implantats ein Pre-Abformpfosten (25) oder eine Einheilkappe befestigt wird, der dann mit dem Gebiss abgeformt wird, wobei anhand dieser Abformung ein Gipsabdruck als Positivmodell erzeugt wird, welches anschließend abgescannt wird oder alternativ direkt ein Oral-Scan des Gebiss- und Gaumenbereichs mit dem Pre-Abformpfosten angefertigt wird, wobei der Pre-Abformpfosten (25) danach gegen einen digital vorliegenden Original-Abformpfosten (27) ausgetauscht wird und wobei dann anhand der zuvor gewonnenen Daten mittels 3D-Druck ein individueller Abformlöffel (20) einschließlich Abformung des Implantats und Modifizierung der für den Oral-Scan erhaltenen Daten mittels wenigstens eines für eine Materialeigenschaft des Abformmaterials spezifischen Parameters gestaltet wird.

12. Verfahren nach einem der Ansprüche 1 bis 11, **dadurch gekennzeichnet, dass** in diesem ein monophasiges Abformmaterial, ein duophasiges Abformmaterial, ein Doppelmischmaterial oder ein Alginat als Abformmaterial verwendet wird.

## Claims

1. A method for producing an individual dental impression tray, in which, first of all, an impression of the dentition and the palatal region of the patient is formed by means of a suitable impression material and a standard tray and a plaster cast in the form of a positive model is produced based on this impression and subsequently scanned or, alternatively, an oral scan of the dentition and the palatal region is directly produced, wherein an individual impression tray is subsequently produced by means of 3D printing based on the previously acquired data, and wherein the digital jaw model obtained based on the previously acquired data is transferred to specially programmed CAD software and the individual impression tray is designed by means of this CAD software,
**characterized in that** the impression material to be used is selected from a plurality of different impression materials in the software, and **in that** the data obtained from the scan of the model or intraorally is modified by means of at least one parameter specific to a material property of the selected impression material and the individual impression tray is designed based on this modified data,
wherein at least one clearance (19) in mm, in which a block-out is provided between the impression tray (20) and a jaw region (10) and/or a tooth region (11) of the molded dentition, is selected as a parameter that is dependent on the impression material used, and wherein this at least one clearance is a first clearance (19) in mm for a general block-out, which is constant at all locations on the circumference around the jaw (10).

2. The method according to claim 1, **characterized in that** a second, variable clearance (21) in mm is selected for a local block-out, which is only provided in the region of certain teeth (11), particularly molars or toothless regions.

3. The method according to claim 2, **characterized in that** the second, variable clearance (21) for the local block-out in the corresponding regions is respectively added to the first clearance (19) for the general block-out in order to obtain an overall clearance for the block-out.

4. The method according to one of claims 1 to 3, **characterized in that** a beading (22) is produced at least on the inner side of the impression tray facing the dentition in order to increase the compression pressure in the edge region of the impression tray, wherein the dimensions of said beading in one or two directions in space are selected in dependence on the material properties of the impression material.

5. The method according to claim 4, **characterized in that** the height of the beading (22) on the inner side in the direction of the height of the teeth and the width of the beading on the inner side in the direction transverse to the height of the teeth are selected variably in dependence on the material properties of the impression material.

6. The method according to one of claims 1 to 5, **characterized in that** a beading (23) is produced in the edge region of the impression tray at least on its outer side facing away from the dentition in order to simplify the removal of the impression tray from the mouth of the patient, wherein the dimensions of said beading in two directions in space are selected in dependence on the material properties of the impression material.

7. The method according to claim 6, **characterized in that** the height of the beading (23) on the outer side in the direction of the height of the teeth and the width of the beading (23) on the outer side in the direction transverse to the height of the teeth are selected variably in dependence on the material properties of the impression material.

8. The method according to one of claims 1 to 7, **characterized in that** the individual impression tray (20) is at least in certain areas provided with holes (24) in order to improve the retention of the impression mass, wherein the diameter and/or number of said holes and/or their distances from one another are selected variably in dependence on the respective material properties of the impression material.

9. The method according to claim 8, **characterized in that** cylindrical and/or conical holes (24) are produced in the material of the individual impression tray (20).

10. The method according to one of claims 8 or 9, **characterized in that** holes (24) are produced on the vestibular surface and/or in the palatal region of an upper jaw and/or in the region of the Ah-line of an upper jaw.

11. The method according to one of claims 1 to 10, in which the dentition to be molded comprises at least one implant, **characterized in that**, first of all, a pre-impression post (25) or a healing cap, which is then molded with the dentition, is fastened at the location of the implant and a plaster cast in the form of a positive model is produced based on this impression and subsequently scanned or, alternatively, an oral scan of the dentition and the palatal region with the pre-impression post is directly produced in order to register the position of the implant, wherein the pre-impression post (25) is subsequently replaced with an original impression post (27) that is present in digital form, and wherein an individual impression tray (20) including impression of the implant and modification of the data obtained for the oral scan by means of at least one parameter specific to a material property of the impression material is subsequently designed by means of 3D printing based on the previously acquired data.

12. The method according to one of claims 1 to 11, **characterized in that** a one-phase impression material, a two-phase impression material, a double-mixed material or an alginate is used as impression material in this method.

## Revendications

1. Procédé, destiné à créer un porte-empreintes dentaire individuel, lors duquel, à l'aide d'un matériau d'empreinte adapté et d'une cuiller standard, l'on façonne une empreinte de la denture et du palais du patient et à l'aide de ladite empreinte, l'on génère un moulage en plâtre en tant que modèle positif, que l'on scanne par la suite ou en variante, l'on fait directement un scanner oral de la denture et du palais, pour ensuite, à l'aide des données précédemment collectées, créer par impression en 3D un porte-empreintes individuel, le modèle de mâchoire numérique obtenu au moyen des données précédemment collectées étant ensuite transféré à un logiciel de CAO spécialement programmé et au moyen dudit logiciel CAO, le porte-empreintes individuel étant conçu, **caractérisé**
**en ce que** dans le logiciel, parmi une multiplicité de différents matériaux d'empreinte, l'on sélectionne le matériau d'empreinte qui doit être utilisé, et l'on modifie les données obtenues par le scanner du modèle ou par voie intraorale à l'aide d'au moins un paramètre spécifique pour une propriété de matériau du matériau d'empreinte sélectionné et à l'aide desdites données modifiées, l'on façonne le porte-empreintes individuel,
en tant qu'un paramètre dépendant du matériau d'empreinte utilisé étant sélectionné au moins un écartement (19) en mm selon lequel un comblement est prévu entre le porte-empreintes (20) et une zone de la mâchoire (10) et / ou une zone dentaire (11) de la denture moulée,
cet au moins un écartement étant un premier écartement (19) en mm pour un comblement général, lequel est constant partout sur la périphérie tout autour de la mâchoire (10).

2. Procédé selon la revendication 1, **caractérisé en ce que** l'on sélectionne un deuxième écartement (21) variable en mm pour un comblement local, lequel est prévu uniquement dans la zone de dents (11) précises, notamment de molaires ou dans des zones sans dent.

3. Procédé selon la revendication 2, **caractérisé en ce que** l'on additionne chaque fois le deuxième écartement (21) variable pour le comblement local dans les zones concernées au premier écartement (19) pour le comblement général, pour obtenir une dimension totale pour le comblement.

4. Procédé selon l'une quelconque des revendications 1 à 3, **caractérisé en ce que** pour augmenter la pression de compression dans la zone du bord du porte-empreintes, l'on génère au moins sur sa face interne dirigée vers la denture un bord rabattu (22) dont on sélectionne les dimensions dans une ou deux directions spatiales en fonction des propriétés de matériau du matériau d'empreinte.

5. Procédé selon la revendication 4, **caractérisé en ce que** l'on sélectionne de manière variable la hauteur du bord rabattu (22) sur la face interne en direction de l'extension en hauteur des dents et la largeur du bord rabattu sur la face interne dans la direction transversale à l'extension en hauteur des dents en fonction des propriétés de matériau du matériau d'empreinte.

6. Procédé selon l'une quelconque des revendications 1 à 5, **caractérisé en ce que** pour faciliter le retrait du porte-empreintes de la bouche du patient, l'on génère sur sa zone de bordure au moins sur sa face externe opposée à la denture un bord rabattu (23), dont on sélectionne les dimensions dans une ou deux directions spatiales en fonction des propriétés de matériau du matériau d'empreinte.

7. Procédé selon la revendication 6, **caractérisé en ce que** l'on sélectionne de manière variable la hauteur du bord rabattu (23) sur la face extérieure en direction de l'extension en hauteur des dents et la largeur du bord rabattu (23) sur la face externe dans la direction transversale à l'extension en hauteur des dents en fonction des propriétés de matériau du matériau d'empreinte.

8. Procédé selon l'une quelconque des revendications 1 à 7, **caractérisé en ce que** pour améliorer la rétention de la masse de moulage, l'on munit au moins par endroits le porte-empreintes (20) de trous (24) dont le diamètre et / ou dont le nombre et / ou dont les écarts mutuels sont sélectionnés de manière variable en fonction des propriétés de matériau respectives du matériau d'empreinte.

9. Procédé selon la revendication 8, **caractérisé en ce que** l'on génère des trous (24) cylindriques et / coniques dans le matériau du porte-empreintes (20) individuel.

10. Procédé selon l'une quelconque des revendications 8 ou 9, **caractérisé en ce que** l'on génère des trous (24) sur la face vestibulaire et /ou pour une mâchoire supérieure dans la zone palatine et / ou pour une mâchoire supérieure, dans la zone de la ligne AH.

11. Procédé selon l'une quelconque des revendications 1 à 10, lors duquel la denture à mouler comprend au moins un implant, **caractérisé en ce que** pour détecter la position de l'implant, l'on fixe d'abord à l'endroit de l'implant un transfert de pré-empreinte (25) ou une coiffe de cicatrisation, qui sera ensuite moulé(e) avec la denture, à l'aide de ladite empreinte, un moulage en plâtre étant généré en tant que modèle positif, que l'on scannera par la suite ou en variante, l'on fera directement un scanner oral de la denture et du palais avec le transfert de pré-empreinte, le transfert de pré-empreinte (25) étant remplacé ensuite par un transfert d'empreinte (27) original, présent sous forme numérique et à l'aide des données précédemment collectées, par impression en 3D, un porte-empreintes (20) individuel incluant l'empreinte de l'implant et la modification des données obtenues pour le scanner oral étant façonné au moyen d'au moins un paramètre spécifique pour une propriété de matière du matériau d'empreinte.

12. Procédé selon l'une quelconque des revendications 1 à 11, **caractérisé en ce que** l'on utilise pour celui-ci un matériau d'empreinte monophasique, un matériau d'empreinte duo-phasique, un matériau double-mélange ou un alginate en tant que matériau d'empreinte.
